# EUROPEAN PATENT APPLICATION

(11) **EP 2 391 110 A2**
(43) Date of publication of application: **30.11.2011**
(21) Application number: 11162862.4
(22) Date of filing: 18.04.2011
(51) Int. Cl.: H04N 1/40

(54) **Image scanning device, image forming apparatus including the same, and method of controlling image quality of image scanning device**

(30) Priority: 26.05.2010 KR 20100049115
(71) Applicant: SAMSUNG ELECTRONICS CO., LTD., Suwon-si, Gyeonggi-do (KR)
(72) Inventor: Chun, Jee-hoon, Gyeonggi-do (KR); Min, Hye-young, Gyeonggi-do (KR)
(74) Representative: Hewett, Jonathan Michael Richard

(57) **Abstract**

An image scanning device, an image forming apparatus including an image scanning device which may include a document board on which documents to be scanned are placed and a scanning unit that is installed on a lower portion of the document board to be linearly reciprocated. The scanning unit includes a scanner including a light guide for irradiating light to the documents, and light emitting devices that are separated from both ends of the light guide and irradiate light. The device includes an image sensor for receiving the light emitted from the scanning unit, wherein loss of the light emitted from the light emitting devices is compensated for by increasing an intensity of electric current supplied to the light emitting devices as a distance between the light emitting devices and the light guide increases and a printing unit for printing images of the documents scanned by the image scanning device.

## Description

The present invention relates to image scanning and controlling image quality.

Conventionally image scanning devices use a xenon lamp and a cold cathode fluorescent lamp as a light source for scanning documents. The light source emits light by applying a high voltage to an electrode. Therefore, heat is generated, power is consumed inefficiently, and unnecessary wavelengths, in addition to visible rays that are used to scan the documents, are generated. Further, a mixture gas in the cold cathode fluorescent lamp includes mercury, which may cause environmental problems.

A light emitting diode (LED) may be used as the light source. The LED may be driven at a low voltage, and may generate necessary wavelengths easily. In addition, a flux of light generated from the LED may be independently controlled by adjusting an amount of current applied to the LED in a pulse width modulation (PWM) process.

In an image scanning device using the LED, light is irradiated to a light guide and a document is exposed to the light guide, or a plurality of LEDs may be arranged in series so that the document may be directly exposed to the LEDs.

An LED light source using the light guide usually has a structure in which end portions of the LED and the light guide are coupled to each other, and thus, it is advantageous to ensure that the document is uniformity exposed. However, heat generated when the LED emits the light may deform an acrylic or plastic material that is used as the light guide. For example, the light guide may be whitened to be opaque, and thus, may not effectively perform as the light source of the image scanning device.

Embodiments of the present invention provide an image scanning device, which prevents a whitening phenomenon of a light guide due to heat generated from a light emitting diode (LED) and compensates for light loss, an image forming apparatus including the image scanning device, and a method of controlling image quality of the image scanning device.

According to an aspect of the present invention, an image forming apparatus is provided including an image scanning device which may include a document board on which documents to be scanned are placed and a scanning unit that is installed on a lower portion of the document board to be linearly reciprocated. The scanning unit includes a scanner including a light guide for irradiating light to the documents, and light emitting devices that are separated from both ends of the light guide and irradiate light. The device includes an image sensor for receiving the light emitted from the scanning unit, wherein loss of the light emitted from the light emitting devices is compensated for by increasing an intensity of electric current supplied to the light emitting devices as a distance between the light emitting devices and the light guide increases. The device may include a printing unit for printing images of the documents scanned by the image scanning device.

According to another aspect of the present invention, a method of controlling image quality of an image scanning device is provided including supplying electric currents of different intensities to light emitting devices according to scanning modes in order to compensate for light loss caused by a separation between the light emitting devices and a light guide, so that an output voltage of the image sensor is close to a saturated voltage of the image sensor and high image quality may be maintained in each of the scanning modes.

The above and other aspects and advantages of the present invention will become more apparent by describing in detail exemplary embodiments thereof with reference to the attached drawings in which:
FIG. 1 illustrates an image forming apparatus including an image scanning device, according to an exemplary embodiment of the present invention;
FIG. 2 illustrates an exemplary scanning unit in an image scanning device;
FIG. 3 illustrates exemplary structures of a light guide and a light emitting device;
FIG. 4 is a graph illustrating an exemplary light loss based on an increase in a distance between a light emitting device and a light guide in the image scanning device, according to an embodiment of the present invention;
FIG. 5 is a graph illustrating a variation in light intensity according to an amount of applied current, which is adjusted by using pulse width modulation (PWM), in an image scanning device according to an embodiment of the present invention; and
FIG. 6 is illustrates a method of controlling image quality according to scanning modes in an image scanning device, according to an embodiment of the present invention.

The present invention will now be described more fully with reference to the accompanying drawings, in which exemplary embodiments of the present invention are illustrated.

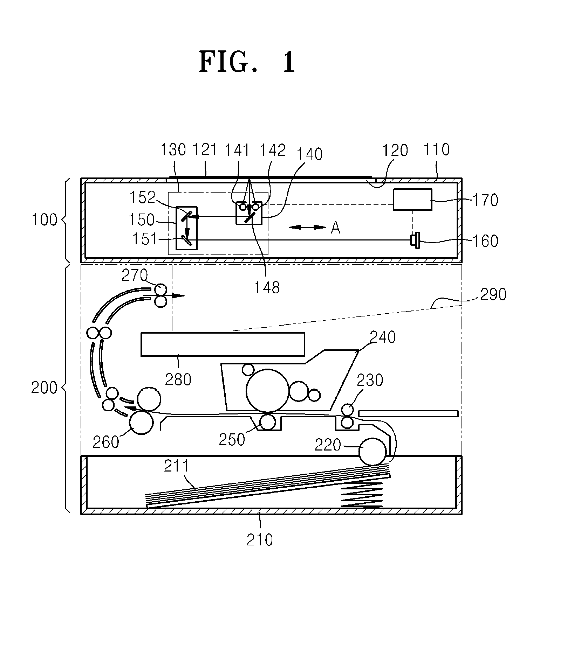

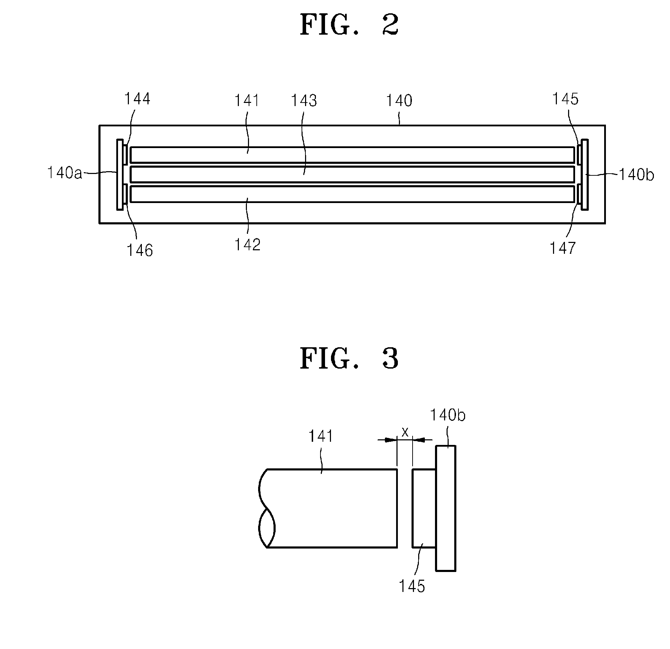

FIG. 1 is a cross-sectional illustration of an exemplary image forming apparatus including an image scanning device, according to an embodiment of the present invention, FIG. 2 is a plan view illustrating a scanning unit in an image scanning device, and FIG. 3 illustrates exemplary structures of a light guide and a light emitting device.

Referring to FIGS. 1 through 3, an image forming apparatus includes a printing unit 200, and an image scanning device 100 that may be disposed on an upper portion of the printing unit 200.

The printing unit 200 may have the same structure as that of a printer. The image forming apparatus may be an electrophotographic image forming apparatus or an inkjet type image forming apparatus. In FIG. 1, an electrophotographic image forming apparatus is illustrated. The printing unit 200 includes a cassette 210 including a plurality of printing media 211 and attachable/detachable to/from the printing unit 200, and a pickup unit 220 for picking up the printing media 211, e.g., one by one, a conveying unit 230 for conveying the picked printing media 211 into a main body of the printing unit 200. The printing unit also includes a developing unit 240 for developing electrostatic latent images by using a developing agent, a transfer unit 250 for transferring the developed image onto the printing media 211, a fusing unit 260 for fusing the transferred image onto the printing media 211, a discharging unit 270 for discharging the printing media 211 on which the image is fused, and an exposure unit 280 for forming the electrostatic latent image.

The image scanning device 100 includes a document board 120, on which documents 121 to be scanned may be placed. The document board 120 may be formed of a transparent material on an upper portion of a main body 110. A scanning unit 130 is installed on a lower portion of the document board 120 so as to be linearly reciprocating, e.g., in a direction denoted by arrow A to irradiate light to the document 121 and reflect light reflected from the document 121 to an image sensor 160.

The scanning unit 130 includes a scanner 140 and a reflector 150 that is separated by a predetermined distance from the scanner 140. The reflector 150 includes reflecting parts 151 and 152.

The scanner 140 includes a plurality of light guides 141 and 142 that are oriented in a width direction of the document board 120 to irradiate the light toward the document board 120. Light emitting devices 144, 145, 146, and 147 may be disposed on both ends of the light guides 141 and 142 to emit the light, and a reflecting mirror 148 for reflecting the light reflected from the document toward the reflector 140.

The light guides 141 and 142 are separated from each other, and an elongated opening 143 is located between the light guides 141 and 142 in a lengthwise direction of the light guides 141 and 142. The reflecting mirror 148 that reflects the light reflected from the document 121 toward the reflector 140 is disposed near a lower portion of the elongated opening 143. Therefore, the light irradiated from the light guides 141 and 142 and reflected from the document 121 passes through the elongated hole 143 and is reflected by the reflecting mirror 148 toward the reflector 150.

Each of the light guides 141 and 142 is separated by a predetermined distance (x) from the light emitting devices 144, 145, 146, and 147 that are installed on fixing frames 140a and 140b. According to an exemplary embodiment, the predetermined distance x may be about 0.1 mm to about 0.5 mm. Since the light guides 141 and 142 and the light emitting devices 144, 145, 146, and 147 are separated from each other, the heat generated from the light emitting devices 144, 145, 146, and 147 is not directly conducted to the light guides 141 and 142. Rather, the heat is dissipated in the air and indirectly transferred to the light guides 141 and 142. Therefore, a whitening phenomenon of the light guides 141 and 142 caused by the heat generated from the light emitting devices 144, 145, 146, and 147 may be prevented. A temperature of some portions in a light guide, that are adjacent to light emitting devices may be higher than that of a center portion. Thus, if a whitening phenomenon occurred a document would not be evenly exposed and scanning quality would be degraded. However, according to an exemplary embodiment, the light guides 141 and 142 are separated by a predetermined distance from the light emitting devices 144, 145, 146, and 147, and thus, the whitening phenomenon is prevented.

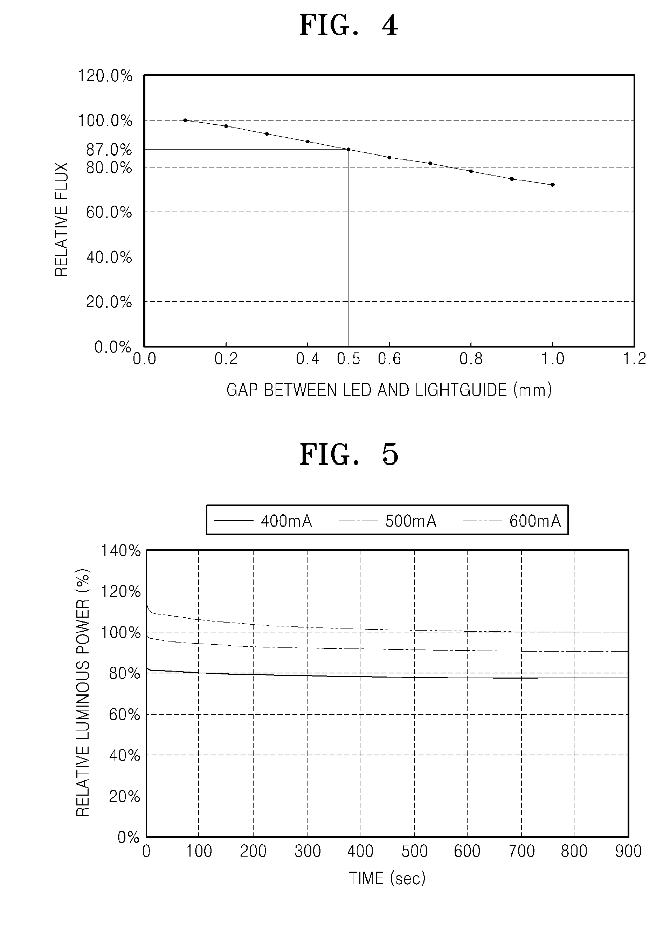

FIG. 4 is a graph illustrating exemplary light loss based on an increase in a distance between the light emitting devices 144, 145, 146, and 147 and the light guides 141 and 142.

As illustrated in FIG. 4, when the distance between the light emitting device and the light guide is 0.1 mm, there is no effective light loss. However, as the distance between the light emitting device and the light guide gradually increases, the light loss increases in proportion to the distance. For example, when the distance between the light emitting device and the light guide is 0.5 mm, the light loss is about 13%.

When a distance between the light emitting device and the light guide is increased, the light emitted from the light emitting device and discharged to the outside without passing through the light guide increases, and thus, uniformity and efficiency of exposing the document may be degraded. That is, as the distance between the light emitting device and the light guide increases, the image quality is degraded.

Therefore, when the distance between the light emitting device and the light guide is set, for example, in a range of 0.1 mm to 0.5 mm, a compensation for the light loss, according to the distance between the light emitting device and the light guide, is required.

The compensation for light loss may be performed by increasing electric current supplied to the light emitting device through pulse width modulation (PWM) to increase the light emission amount of the light emitting device.

FIG. 5 is a graph illustrating an exemplary variation in light intensities based on applied current that is adjusted by using PWM.

As illustrated in FIG. 5, when the applied current is 400 mA, the intensity of light emitted from the light emitting device is about 80%. However, when the applied current is increased by using PWM to about 500 mA, the light intensity is about 90%, and when the applied current is 600 mA, the light intensity is about 100%. That is, when the current applied to the light emitting device is increased by using PWM, the intensity of light emitted from the light emitting device is also increased.

Therefore, as the distance between the light emitting device and the light guide is increased from 0.1 mm to 0.5 mm, the current applied to the light emitting device may increased in order to compensate for the light loss as illustrated in FIG. 5.

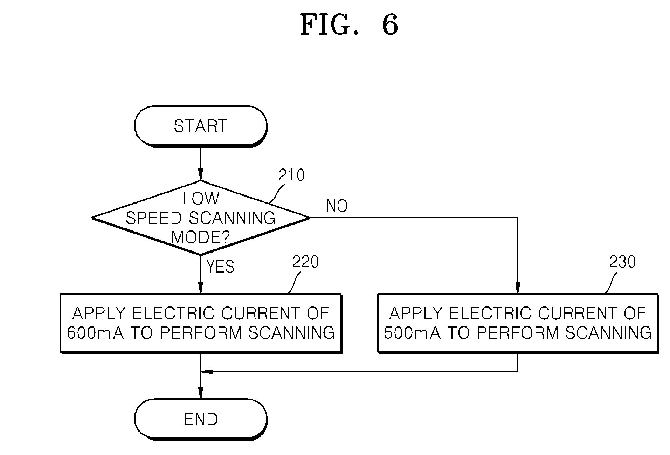

FIG. 6 is a flowchart illustrating an exemplary method of controlling image quality of an image scanning device, e.g. according to a scanning modes.

An output voltage of an image sensor may be in proportion to the intensity of light reaching the image sensor. As the output voltage of the image sensor is close to a saturated voltage of the image sensor, a high signal to noise ratio (SNR) may be obtained, and accordingly, degradation of the scanned image quality may be prevented.

A light source such as a xenon lamp or a cold cathode fluorescent lamp, generates a constant flux from a light emitting substance, and intensities of light reaching the image sensor in different scanning modes, for example, a low speed scanning mode (600dpi) and a high speed scanning mode (300dpi), are different from each other. If a document is scanned at a high speed, an output voltage of the image sensor may be reduced and the SNR increased, and accordingly, the image quality degraded.

According to an exemplary embodiment, this problem is addressed, as illustrated in FIG. 6, as a quality of a scanned image is controlled by adjusting the light intensity in different scanning modes. The number of scanning modes is not limited to the above example, and various scanning modes may be adopted.

As illustrated in FIGS. 1 and 6, a controller 170 installed in the image forming apparatus of FIG. 1 may totally control the components related to a scanning operation. According to an exemplary embodiment, the image forming apparatus of the current embodiment has two scanning modes, that is, the low speed scanning mode (600 dpi) and the high speed scanning mode (300 dpi). In the low speed scanning mode, a scanned image of high image quality may be obtained due to the low scanning speed, and in the high speed scanning mode, a scanned image of low image quality is obtained due to the high scanning speed.

In the image forming apparatus of FIG. 1, when the electric current of 500 mA is supplied to the light emitting device, to which electric current of maximum 600 mA may be supplied, the output voltage of the image sensor is close to the saturated voltage of the image sensor.

When a scanning command is transferred to the image scanning device, the controller 170 determines whether the scanning command is for the low speed scanning mode (S210). Upon the controller 170 determining that the scanning command is for the low speed scanning mode, the controller 170 applies the current of 600 mA to the light emitting device to scan a document (S220). Upon the controller 170 determining that the scanning command is not for the low speed scanning mode, the controller 170 applies the electric current of 500 mA to scan the document (S230).

Therefore, in the low speed scanning mode, the electric current of 500 mA may be applied to the light emitting device, and thus, the output voltage of the image sensor is similar to the saturated voltage and an optimal image quality may be obtained. In addition, in the high speed scanning mode, the electric current of 600 mA may be applied to the light emitting device so that the output voltage of the image sensor is close to the saturated voltage, and thus, optimal image quality may be obtained.

That is, an electric current of higher magnitude than that in the low speed scanning mode is applied to the light emitting device in the high speed scanning mode, and thus, a scanned image of high image quality may be obtained even in the high speed scanning mode.

Further, according to an aspect of the embodiments, any combinations of the described features, functions and/or operations can be provided.

Since numerous modifications and changes will readily occur to those skilled in the art, it is not desired to limit the embodiments to the exact construction and operation illustrated and described, and changes may be made in these embodiments without departing from the principles of the invention, the scope of which is defined in the appended claims.

## Claims

1. An image forming apparatus comprising:
an image scanning device which comprises:
a document board on which documents to be scanned are placed;
a scanning unit which is installed on a lower portion of the document board to be linearly reciprocated, and comprises
a scanner including at least one light guide for irradiating light to the documents, and
a plurality of light emitting devices that are separated from both ends of the light guide and irradiate light; and
an image sensor for receiving the light emitted from the scanning unit,
wherein loss of the light emitted from the light emitting devices is compensated for by increasing an intensity of electric current supplied to the light emitting devices as a distance between the light emitting devices and the light guide increases; and
a printing unit for printing images of the documents scanned by the image scanning device.

2. The image forming apparatus of claim 1, wherein the scanning unit further comprises a reflector including a reflecting mirror that changes a path of light reflected from the documents through the scanner to the image sensor.

3. The image forming apparatus of claim 2, wherein the scanner further comprises a reflecting mirror that reflects light reflected from the documents toward the reflector.

4. The image forming apparatus of claim 1, wherein the distance between the light emitting devices and the light guide is in a range of 0.1 mm to 0.5 mm.

5. A method of controlling image quality of an image scanning device which comprises document board on which documents to be scanned are placed, a scanning unit which is installed on a lower portion of the document board to be linearly reciprocated, and comprises a scanner including at least one light guide for irradiating light to the documents, and a plurality of light emitting devices that are separated from both ends of the light guide and irradiate light, and an image sensor for receiving the light emitted from the scanning unit, wherein the image scanning device has a plurality of scanning modes, the method comprising:
supplying electric currents of different intensities to the light emitting devices according to the scanning modes in order to compensate for light loss caused by the separation between the light emitting devices and the light guide, so that an output voltage of the image sensor is close to a saturated voltage of the image sensor and high image quality may be maintained in each of the scanning modes.

6. The method of claim 5, wherein the electric current supplied to the light emitting devices in a high speed scanning mode is of higher intensity than the electric current supplied in a low speed scanning mode.

7. The method of claim 6, wherein the distance between the light emitting devices and the light guide is in a range of 0.1 mm to 0.5 mm.
